# EUROPÄISCHE PATENTANMELDUNG

(11) **EP 4 144 432 A1**
(43) Veröffentlichungstag der Anmeldung: **08.03.2023**
(21) Anmeldenummer: 21020451.7
(22) Anmeldetag: 07.09.2021
(51) Int. Cl.: B01D 53/04

(54) **VERTEILERMODUL FÜR EINE VERFAHRENSTECHNISCHE ANLAGE**

(71) Anmelder: Linde GmbH, 82049 Pullach (DE)
(72) Erfinder: Lochner, Stefan, 82049 Pullach (DE); Schroll, Stefan, 82049 Pullach (DE)
(74) Vertreter: Imhof, Dietmar

(57) **Zusammenfassung**

Bereitgestellt wird ein Verteilermodul für eine verfahrenstechnische Anlage, insbesondere eine Luftzerlegungsanlage, das an eine Hauptluftverdichter-Anordnung, wenigstens zwei Adsorber, von denen jeder in einer Adsorptionsphase und einer Regenerationsphase betreibbar ist, und eine Hauptwärmetauscher-Anordnung mittels Fluidleitungen anbindbar ist, umfassend einen Verdichteranschluss, für jeden anzubindenden Adsorber jeweils ein Anschlusspaar mit einem ersten Adsorberanschluss und einen zweitem Adsorberanschluss, einen ersten Wärmetauscheranschluss und einen zweiten Wärmetauscheranschluss, und einen Restgasanschluss oder einen Restgasauslass; und eine Ventil- und Klappenbaugruppe, die dazu eingerichtet ist, für jedes Anschlusspaar wahlweise: in einem ersten Zustand des Anschlusspaars den Verdichteranschluss mit dem ersten Adsorberanschluss des Anschlusspaars fluidisch zu verbinden und den zweiten Adsorberanschluss des Anschlusspaars mit dem ersten Wärmetauscheranschluss fluidisch zu verbinden, oder in einem zweiten Zustand des Anschlusspaars den zweiten Wärmetauscheranschluss mit dem zweiten Adsorberanschluss des Anschlusspaars fluidisch zu verbinden und den ersten Adsorberanschluss des Anschlusspaars mit dem Restgasanschluss oder einen Restgasauslass fluidisch zu verbinden; wobei das Verteilermodul eine Bodenseite aufweist und eine senkrecht zur Bodenseite gemessene Höhe des Verteilermoduls größer ist als eine parallel zur Bodenseite gemessene Querabmessung des Verteilermoduls.

## Beschreibung

Die Erfindung betrifft ein Verteilermodul für eine verfahrenstechnische Anlage, insbesondere für eine Luftzerlegungsanlage, und eine Luftzerlegungsanlage.

### Stand der Technik

Die Herstellung von Luftprodukten in flüssigem oder gasförmigem Zustand durch Tieftemperaturzerlegung von Luft in Luftzerlegungsanlagen ist bekannt und beispielsweise bei H.-W. Häring (Hrsg.), Industrial Gases Processing, Wiley-VCH, 2006, insbesondere Abschnitt 2.2.5, "Cryogenic Rectification", beschrieben.

Luftzerlegungsanlagen weisen Rektifikationskolonnensysteme bzw. Destillationssäulensysteme auf, die herkömmlicherweise beispielsweise als Zweikolonnensysteme, insbesondere als klassische Linde-Doppelkolonnensysteme, aber auch als Drei- oder Mehrkolonnensysteme ausgebildet sein können. Neben den Rektifikationskolonnen zur Gewinnung von Stickstoff und/oder Sauerstoff in flüssigem und/oder gasförmigem Zustand, also den Rektifikationskolonnen zur Stickstoff-Sauerstoff-Trennung, können Rektifikationskolonnen zur Gewinnung weiterer Luftkomponenten, insbesondere der Edelgase Krypton, Xenon und/oder Argon, vorgesehen sein. Häufig werden dabei die Begriffe "Rektifikation" und "Destillation" sowie "Säule" und "Kolonne" bzw. hieraus zusammengesetzte Begriffe synonym verwendet.

Zur Bereitstellung von Druckstickstoff als Hauptprodukt ist aus dem Stand auch die Tieftemperaturzerlegung von Luft gemäß dem sogenannten SPECTRA-Verfahren bekannt, wie es unter anderem in der EP 2 789 958 A1 und der weiteren dort zitierten Patentliteratur beschrieben ist. Es handelt sich hierbei in der einfachsten Ausgestaltung um ein Einkolonnenverfahren.

Die Luftzerlegung umfasst als wesentliche Schritte die Verdichtung, Vorkühlung, Aufreinigung, Abkühlung und Rektifikation. Die Verdichtung erfolgt beispielsweise in mehrstufigen Turbokompressoren mit Zwischen- und Nachkühlung auf einen Druck von ca. 5 bar oder mehr. Vor der Verdichtung können Staubpartikel in sogenannten Intensivfiltern entfernt werden. Zur anschließenden Vorkühlung können mit Wasser betriebene Direktkontaktkühler eingesetzt werden, in denen zudem eine teilweise Auswaschung wasserlöslicher Verunreinigungen erfolgen kann. Das verwendete Wasser kann beispielsweise in Rieselverdunstungskühlern gegen Stickstoffrestgas aus der Rektifikation (auch als "Kühlstickstoff' bezeichnet) rückgekühlt werden.

Die Aufreinigung bzw. Reinigung der vorgekühlten Luft erfolgt i.d.R. in Adsorbern bzw. Molekularsiebadsorbern. In diesen werden Feuchtigkeit, Kohlendioxid und Kohlenwasserstoffe entfernt. Es sind i.d.R. zwei (oder mehr) Adsorber vorgesehen, die jeweils abwechselnd in einer Adsorptionsphase bzw. einer Regenerationsphase betrieben werden, so dass ein kontinuierlicher Betrieb der Luftzerlegungsanlage sichergestellt ist.

Zur Verflüssigung wird die derart aufgereinigte Luft in einem oder mehreren Hauptwärmetauschern auf ca. -175 °C abgekühlt. Die Abkühlung erfolgt durch internen Wärmeaustausch im Gegenstrom zu in der Anlage erzeugten kalten Gasströmen. Auch hier wird i.d.R. zumindest Stickstoffrestgas aus der Rektifikation verwendet; hier kann auch ein Gas Verwendung finden, das deutlich reicher an Sauerstoff O₂ als Luft ist, bis hin zu reinem O₂. Bei einer anschließenden Expansion kühlt sich die Luft durch den Joule-Thomson-Effekt weiter ab und verflüssigt sich. Die eigentliche Zerlegung (Rektifikation) der Luft erfolgt in Trennsäulen (Rektifikationskolonnen) eines Trennsäulensystems, wobei zunächst eine sauerstoffreiche Sumpffraktion und eine stickstoffreiche Kopffraktion erzeugt werden.

Die Montage von Luftzerlegungsanlagen erfolgt dabei i.d.R. aus vorgefertigten Bauteilen. Dies ist jedoch häufig problematisch, da ausreichend qualifiziertes Personal zur Montage entweder nicht verfügbar oder teuer ist. Insbesondere betrifft dies die Anbindung der Adsorber an die Verdichter-Stufe und die Abkühlungs-Stufe. Daher besteht der Bedarf nach Verbesserungen, die eine zuverlässigere und einfachere Erstellung von Luftzerlegungsanlagen ermöglichen.

### Offenbarung der Erfindung

Erfindungsgemäß wird die Aufgabe gelöst durch ein Verteilermodul und eine Luftzerlegungsanlage mit den Merkmalen der unabhängigen Ansprüche; abhängige Ansprüche betreffen bevorzugte Ausführungsformen.

Vor der Erläuterung der Merkmale und Vorteile der vorliegenden Erfindung werden einige Grundlagen der vorliegenden Erfindung näher erläutert und nachfolgend verwendete Begriffe definiert.

Die in einer Luftzerlegungsanlage eingesetzten Vorrichtungen sind in der zitierten Fachliteratur, beispielsweise bei Häring (s.o.) in Abschnitt 2.2.5.6, "Apparatus", beschrieben. Sofern die nachfolgenden Definitionen nicht hiervon abweichen, wird daher zum Sprachgebrauch, der im Rahmen der vorliegenden Anmeldung verwendet wird, ausdrücklich auf die zitierte Fachliteratur verwiesen.

Flüssigkeiten und Gase können im hier verwendeten Sprachgebrauch reich oder arm an einer oder an mehreren Komponenten sein, wobei "reich" für einen Gehalt von wenigstens 75%, 90%, 95%, 99%, 99,5%, 99,9% oder 99,99% und "arm" für einen Gehalt von höchstens 25%, 10%, 5%, 1%, 0,1% oder 0,01% auf Mol-, Gewichts- oder Volumenbasis stehen kann. Der Begriff "überwiegend" kann der Definition von "reich" entsprechen. Flüssigkeiten und Gase können ferner angereichert oder abgereichert an einer oder mehreren Komponenten sein, wobei sich diese Begriffe auf einen Gehalt in einer Ausgangsflüssigkeit oder einem Ausgangsgas beziehen, aus der oder dem die Flüssigkeit oder das Gas gewonnen wurde.

Die Flüssigkeit oder das Gas sei "angereichert", wenn diese oder dieses zumindest den 1,1-fachen, 1,5-fachen, 2-fachen, 5-fachen, 10-fachen 100-fachen oder 1.000-fachen Gehalt, und "abgereichert", wenn diese oder dieses höchstens den 0,9-fachen, 0,5-fachen, 0,1-fachen, 0,01-fachen oder 0,001-fachen Gehalt einer entsprechenden Komponente, bezogen auf die Ausgangsflüssigkeit oder das Ausgangsgas, enthält. Ist hier beispielsweise von "Sauerstoff", "Stickstoff" oder "Argon" die Rede, sei hierunter auch eine Flüssigkeit oder ein Gas verstanden, die bzw. das reich an Sauerstoff oder Stickstoff ist, jedoch nicht ausschließlich hieraus bestehen muss.

Die vorliegende Anmeldung verwendet zur Charakterisierung von Drücken und Temperaturen die Begriffe "Druckniveau" und "Temperaturniveau", wodurch zum Ausdruck gebracht werden soll, dass entsprechende Drücke und Temperaturen in einer entsprechenden Anlage nicht in Form exakter Druck- bzw. Temperaturwerte verwendet werden müssen, um das erfinderische Konzept zu verwirklichen. Jedoch bewegen sich derartige Drücke und Temperaturen typischerweise in bestimmten Bereichen, die beispielsweise ± 1%, 5%, 10% oder 20% um einen Mittelwert liegen. Entsprechende Druckniveaus und Temperaturniveaus können dabei in disjunkten Bereichen liegen oder in Bereichen, die einander überlappen. Insbesondere schließen beispielsweise Druckniveaus unvermeidliche oder zu erwartende Druckverluste ein. Entsprechendes gilt für Temperaturniveaus. Bei den hier in bar angegebenen Druckniveaus handelt es sich um Absolutdrücke.

Ist hiervon "Entspannungsmaschinen" die Rede, seien darunter typischerweise bekannte Turboexpander verstanden. Diese Entspannungsmaschinen können insbesondere auch mit Verdichtern gekoppelt sein. Bei diesen Verdichtern kann es sich insbesondere um Turboverdichter handeln. Eine entsprechende Kombination aus Turboexpander und Turboverdichter wird typischerweise auch als "Turbinenbooster" bezeichnet. In einem Turbinenbooster sind der Turboexpander und der Turboverdichter mechanisch gekoppelt, wobei die Kopplung drehzahlgleich (beispielsweise über eine gemeinsame Welle) oder drehzahlunterschiedlich (beispielsweise über ein geeignetes übersetzendes Getriebe) erfolgen kann. Allgemein wird hier der Begriff "Verdichter" verwendet. Ein "Kaltverdichter" bezeichnet dabei hier einen Verdichter, dem ein Fluidstrom auf einem Temperaturniveau deutlich unterhalb von 0 °C, insbesondere unterhalb von -50, -75 oder -100 °C und bis zu -150 oder -200 °C zugeführt wird. Ein entsprechender Fluidstrom wird insbesondere mittels eines Hauptwärmetauschers (siehe sogleich) auf ein entsprechendes Temperaturniveau abgekühlt.

Ein "Hauptluftverdichter" zeichnet sich dadurch aus, dass durch ihn die gesamte, der Luftzerlegungsanlage zugeführte und dort zerlegte Luft verdichtet wird. Hingegen wird in einem oder mehreren optional vorgesehenen weiteren Verdichtern, beispielsweise Nachverdichtern, nur jeweils ein Anteil (bis zu einem Vielfachen, wenn die Luft im Kreis gefahren wird) dieser bereits zuvor im Hauptluftverdichter verdichteten Luft weiter verdichtet. Entsprechend stellt der "Hauptwärmetauscher" einer Luftzerlegungsanlage den Wärmetauscher dar, in dem zumindest der überwiegende Anteil der der Luftzerlegungsanlage zugeführten und dort zerlegten Luft abgekühlt wird. Dies erfolgt zumindest zum Teil und ggf. nur im Gegenstrom zu Stoffströmen, die aus der Luftzerlegungsanlage ausgeleitet werden. Aus einer Luftzerlegungsanlage "ausgeleitete" Stoffströme oder "Produkte" sind im hier verwendeten Sprachgebrauch Fluide, die nicht mehr an anlageninternen Kreisläufen teilnehmen, sondern diesen dauerhaft entzogen werden.

Ein "Wärmetauscher" zum Einsatz im Rahmen der vorliegenden Erfindung kann in fachüblicher Art ausgebildet sein. Er dient zur indirekten Übertragung von Wärme zwischen zumindest zwei z.B. im Gegenstrom zueinander geführten Fluidströmen, beispielsweise einem warmen Druckluftstrom und einem oder mehreren kalten Fluidströmen oder einem tiefkalten flüssigen Luftprodukt und einem oder mehreren warmen bzw. wärmeren, ggf. aber auch noch tiefkalten Fluidströmen. Ein Wärmetauscher kann aus einem einzelnen oder mehreren parallel und/oder seriell verbundenen Wärmetauscherabschnitten gebildet sein, z.B. aus einem oder mehreren Plattenwärmetauscherblöcken. Es handelt sich beispielsweise um einen Plattenwärmetauscher (engl. Plate Fin Heat Exchanger). Ein derartiger Wärmetauscher weist "Passagen" auf, die als voneinander getrennte Fluidkanäle mit Wärmeaustauschflächen ausgebildet und parallel und durch andere Passagen getrennt zu "Passagengruppen" zusammengeschlossen sind. Kennzeichen eines Wärmetauschers ist, dass in ihm zu einem Zeitpunkt Wärme zwischen zwei mobilen Medien ausgetauscht wird, nämlich wenigstens einem abzukühlenden und wenigstens einem zu erwärmenden Fluidstrom.

Als "Kondensatorverdampfer" wird ein Wärmetauscher bezeichnet, in dem ein kondensierender Fluidstrom in indirekten Wärmeaustausch mit einem verdampfenden Fluidstrom tritt. Jeder Kondensatorverdampfer weist einen Verflüssigungsraum und einen Verdampfungsraum auf. Verflüssigungs- und Verdampfungsraum weisen Verflüssigungs- bzw. Verdampfungspassagen auf. In dem Verflüssigungsraum wird die Kondensation (Verflüssigung) des kondensierenden Fluidstroms durchgeführt, in dem Verdampfungsraum die Verdampfung des verdampfenden Fluidstroms. Der Verdampfungs- und der Verflüssigungsraum werden durch Gruppen von Passagen gebildet, die untereinander in Wärmeaustauschbeziehung stehen.

Als "Adsorber" bzw. "Molekularsiebadsorber" bzw. "Molsieb-Adsorber" werden insbesondere Vorrichtungen zur Trennung von Gasgemischen bezeichnet, die sich den physikalischen Effekt der Adsorption, d.h. dass sich Stoffe bzw. Moleküle aus Gasen oder Flüssigkeiten an der Oberfläche eines Festkörpers anreichern. Die adsorbierten Stoffe/Moleküle können unter Verwendung eines Reinigungsgases, das durch den Adsorber geleitet wird, wieder von der Oberfläche des Festkörpers entfernt werden. In Luftzerlegungsanlagen wird mittels Adsorbern die vom Hauptluftverdichter verdichtete Luft vor dem Abkühlen auf Tieftemperaturen von Verunreinigungen, insbesondere H₂O, CO₂ und Acetylene, gereinigt. Bevorzugt werden Zeolith-Adsorber verwendet, d.h. Adsorber, die Zeolith-Kristalle enthalten, an deren Oberfläche sich die zu adsorbierenden Stoffe anreichern, wobei die Adsorption in Poren mit einem Durchmesser von ca. 1 nm an der Oberfläche der Zeolith-Kristalle erfolgt. Die Zeolith-Kristalle sind durch ein Keramikmaterial gebunden, wobei kugelförmige oder stabförmige Elemente mit einer Abmessung im Millimeterbereich gebildet sind.

In Luftzerlegungsanlagen sind in der Regel mehrere Adsorber vorgesehen, insbesondere zwei Adsorber, die wechselweise in einer Adsorptionsphase und einer Regenerationsphase betrieben werden. Während der Adsorptionsphase wird vom Hauptluftverdichter kommende Luft durch den Adsorber geleitet, typischerweise bei einem Druckniveau von 5 bis 40 bar. Anschließend wird der Druck zunächst auf Umgebungsdruck gesenkt und in der Regenerationsphase wird ein Reinigungsgas, in der Regel trockener restlicher Stickstoff, der einer Rektifikationskolonne entnommen ist und durch den Hauptwärmetauscher geleitet wird, in Gegenstromrichtung durch den Adsorber geleitet, wobei eine Aufwärmphase mit warmen Reinigungsgas und eine Kühlphase mit kaltem Reinigungsgas vorgesehen sind. Anschließend wird das Druckniveau im Adsorber wieder auf das Druckniveau der vom Hauptluftverdichter kommenden Luft erhöht. Die Adsorption findet in der Regel unter dem Enddruck des Hauptluftverdichters statt. Die Regeneration wird unter möglichst niedrigem Druck mit trockenem Gas, das nach den Adsorbern entnommen wird, durchgeführt. Da mehrere Adsorber vorgesehen sind, kann eine ununterbrochene Reinigung der Luft erreicht werden.

Der Begriff "Modul" ist als Baugruppe miteinander verbundener Elemente zu verstehen, die in dem Modul fest angeordnet sind. Die Elemente sind durch eine Trägerkonstruktion, etwa einen Trägerrahmen, ein Traggehäuse oder ähnliches, miteinander verbunden. Ein Modul stellt also eine Baueinheit dar, in der die Elemente fixiert angeordnet sind. Insbesondere kann das Modul bzw. dessen Elemente als Ganzes bewegt werden, z.B. von einem Herstellungsort zu einer Baustelle transportiert werden.

Der Ausdruck "fluidisch verbunden" ist im Sinne von mittels einer Fluidleitung verbunden zu verstehen. Es kann als ein Fluid zwischen fluidisch verbundenen Elementen ausgetauscht werden.

Die relativen räumlichen Begriffe "oben", "unten", "über", "unter", "oberhalb", "unterhalb", "neben", "nebeneinander", "vertikal", "horizontal" etc. beziehen sich hier auf die räumliche Ausrichtung der Destillationssäulen einer Luftzerlegungsanlage im Normalbetrieb. Unter einer Anordnung zweier Destillationssäulen oder anderer Komponenten "übereinander" wird hier verstanden, dass das sich obere Ende des unteren der beiden Apparateteile sich auf niedrigerer oder gleicher geodätischer Höhe befindet wie das untere Ende der oberen der beiden Apparateteile und sich die Projektionen der beiden Apparateteile in einer horizontalen Ebene überschneiden. Insbesondere können die beiden Apparateteile genau übereinander angeordnet sein, das heißt die Achsen der beiden Säulen verlaufen auf derselben vertikalen Geraden.

Ein erfindungsgemäßes Verteilermodul für eine verfahrenstechnische Anlage, ist an eine Hauptluftverdichter-Anordnung, wenigstens zwei Adsorber, von denen jeder in einer Adsorptionsphase und einer Regenerationsphase betreibbar ist, und eine Hauptwärmetauscher-Anordnung mittels Fluidleitungen anbindbar und umfasst einen Verdichteranschluss, für jeden anzubindenden Adsorber jeweils ein Anschlusspaar mit einem ersten Adsorberanschluss und einen zweitem Adsorberanschluss, einen ersten Wärmetauscheranschluss und einen zweiten Wärmetauscheranschluss, und einen Restgasanschluss oder einen Restgasauslass; und eine Ventil- und Klappenbaugruppe. Die Ventil- und Klappenbaugruppe ist dazu eingerichtet (d.h. insbesondere entsprechend ansteuerbar), für jedes Anschlusspaar wahlweise: in einem ersten Zustand des Anschlusspaars den Verdichteranschluss mit dem ersten Adsorberanschluss des Anschlusspaars fluidisch zu verbinden und den zweiten Adsorberanschluss des Anschlusspaars mit dem ersten Wärmetauscheranschluss fluidisch zu verbinden, oder in einem zweiten Zustand des Anschlusspaars den zweiten Wärmetauscheranschluss mit dem zweiten Adsorberanschluss des Anschlusspaars fluidisch zu verbinden und den ersten Adsorberanschluss des Anschlusspaars mit dem Restgasanschluss oder einen Restgasauslass fluidisch zu verbinden. Das Verteilermodul weist eine Bodenseite auf und eine senkrecht zur Bodenseite gemessene Höhe des Verteilermoduls ist größer als eine parallel zur Bodenseite gemessene Querabmessung des Verteilermoduls. Diese Bedingung kann so formuliert werden, dass die Seitenflächen eines gedachten, möglichst kleinen Quaders, der das Verteilermodul einschließt, höher sind als die Seiten/Kanten der Fläche (Bodenseite) auf der dieser steht.

Bevorzugt ist die verfahrenstechnischen Anlage eine Luftzerlegungsanlage.

Die Integration der Ventil- und Klappenbaugruppe, die typischerweise eine Vielzahl von Ventilen bzw. Klappen umfasst, um die Fluidströme (Luftstrom, Regenerationsgasstrom) wechselweise zu den Adsorbern zu leiten, in einem Modul ermöglicht eine schnelle und einfache Montage, wobei nach Aufstellen des Verteilermoduls auf der Bodenseite im Wesentlichen nur noch die Anschlüsse über Fluidleitungen mit den weiteren Baugruppen (Hauptluftverdichter-Anordnung, Adsorber, Hauptwärmetauscher-Anordnung) zu verbinden sind. Dadurch, dass die Höhe relativ zur Querabmessung groß ist, wird ein kleiner Flächenbedarf auf einer Gesamtfläche der verfahrenstechnischen Anlage bzw. Luftzerlegungsanlage erreicht.

Die "Bodenseite" stellt die Seite des Verteilermoduls dar auf, dem dieses auf einer Bodenfläche der verfahrenstechnischen Anlage (insbesondere Luftzerlegungsanlage) für den Betrieb aufgestellt werden soll, d.h. die Bodenseite ist entsprechend eingerichtet bzw. gestaltet. Im aufgestellten Zustand befindet sich die Bodenseite also unten. Die Bodenseite wird typischerweise nicht durch geschlossene Seitenwand o.ä. gebildet. Vielmehr sind dort typischerweise Rahmenelemente vorgesehen, die direkt oder indirekt am Boden verankert werden können. Die Querabmessung kann z.B. eine maximale oder eine durchschnittliche parallel zur Bodenseite gemessene Abmessung bzw. Ausdehnung des Verteilermoduls sein.

Bevorzugt ist die Höhe wenigstens um das 1,5-fache, weiter bevorzugt wenigstens um das 2-fache, noch weiter bevorzugt um wenigstens das 3-fache, am meisten bevorzugt um mehr als das 5-fache, größer als die Querabmessung. Bevorzugt ist die Querabmessung eines von einer maximalen Abmessung des Verteilermoduls parallel zur Bodenseite, einer durchschnittlichen Abmessung des Verteilermoduls parallel zur Bodenseite, die Wurzel aus einen Flächeninhalt der Bodenseite. Vorzugsweise sollte die Höhe maximal das 5-fache der Querabmessung betragen. Diese relativen Abmessungen bzw. Charakterisierungen erlauben es unter Berücksichtigung typischer Größenanforderungen von Ventilen/Klappen und Fluidleitungen eine kleine Bodenseite des Verteilermoduls und damit indirekt eine kleine Gesamtfläche der Luftzerlegungsanlage. Gleichzeitig ist ein einfacher Transport des Verteilermoduls möglich.

Die "Höhe" des Verteilermoduls ist die im aufgestellten Zustand (bei Normalbetrieb) in vertikaler Richtung gemessene Abmessung des Verteilermoduls und entspricht beim Transport im liegenden Zustand einer "Transportlänge". Die Höhenrichtung entspricht der vertikalen Richtung. Die ebenso genannte "Querabmessung" ist eine im aufgestellten Zustand in horizontaler Richtung (also orthogonal zur vertikalen Richtung) gemessene Abmessung des Verteilermoduls. "Oben" und "unten", weitergehend "oberhalb" und "unterhalb" sind ausgehend von der Bodenseite definiert, d.h. die Bodenseite ist die untere Seite des Verteilermoduls. Die Bodenseite verläuft also entsprechend in horizontaler Richtung. Wie bereits weiter oben erläutert, wird unter einer Anordnung von Komponenten "übereinander" verstanden, dass das sich obere Ende der unteren der beiden Komponenten sich unterhalb (im aufgestellten Zustand auf niedrigerer oder gleicher geodätischer Höhe) befindet wie das untere Ende der oberen der beiden Komponenten und sich die vertikalen Projektionen der beiden Komponenten in einer horizontalen Ebene überschneiden. Insbesondere können die beiden Komponenten genau übereinander angeordnet sein. Komponenten können hier Apparateteile des Verteilermoduls sein, insbesondere Apparateteile (z.B. Ventile und/oder Klappen) der Ventil- und Klappenbaugruppe.

Vorzugsweise umfasst das Verteilermodul einen Regenerationsgas-Erhitzer, der fluidisch mit dem zweiten Wärmetauscheranschluss verbunden ist. Vorzugsweise umfasst das Verteilermodul Fluidleitungen und/oder Fluidanschlüsse zur Verbindung mit einem Nachverdichter, der so fluidisch mit dem ersten Wärmetauscheranschluss verbunden werden kann. Der Regenerationsgas-Erhitzer ist insbesondere erhitzbar und dazu eingerichtet, ein Regenerationsgas zu erhitzen. Entsprechende Leitungen zur Energiezufuhr können ebenfalls im Verteilermodul umfasst sein. Diese Ausführungen führen zu einer weiteren Integration und damit zu einer weiteren Vereinfachung der Montage. Alternativ oder zusätzlich zu einem im Verteilermodul umfassten Regenerationsgas-Erhitzer können auch Fluidleitungen und/oder Fluidanschlüsse im Verteilermodul vorgesehen sein, die das Herstellen einer fluidischen Verbindung mit einem externen Regenerationsgas-Erhitzer ermöglichen, der nicht im Verteilermodul integriert ist.

Vorzugsweise umfasst das Verteilermodul eine Steuerungseinheit, die dazu eingerichtet ist, die Ventil- und Klappenbaugruppe zu steuern, wobei ein Anschlusspaar entsprechend dem ersten Zustand betrieben wird, um den daran angebundenen Adsorber in der Adsorptionsphase zu betreiben, und entsprechend dem zweiten Zustand betrieben wird, um den daran angebundenen Adsorber in der Regenerationsphase zu betreiben; wobei weiter bevorzugt die Steuerungseinheit dazu eingerichtet ist, die Ventil- und Klappenbaugruppe zu steuern, so dass abwechselnd wenigstens ein Anschlusspaar entsprechend dem ersten Zustand betrieben wird. Vorteilhafterweise ist die Steuerungseinheit in einem Gehäuse oder Container untergebracht, die/der über einen Zugang, etwa in Form einer Tür, verfügt. Alle Instrumente, die ihre Signale elektrisch übermitteln, können mit den I/O Karten des Prozessleitsystems verbunden werden, die sich dann auch auf dem Verteilermodul befinden und den Vorfertigungsgrad erhöhen.

Bevorzugt umfasst das Verteilermodul eine Instrumentenluftverteilungs-Anordnung mit Instrumentenluftleitungen, die mit Steueranschlüssen von in der Ventil- und Klappenbaugruppe umfassten Ventilen und/oder Klappen fluidisch verbunden sind; wobei weiter bevorzugt I/O-Karten auf dem Verteilermodul angeordnet sind, die zum Datenaustausch mit Steuerelementen der Instrumentenluftverteilungs-Anordnung, die zum Schalten von Instrumentenluft dienen, verbunden sind, wobei die I/O-Karten mit Datenkabeln, insbesondere Buskabeln, verbindbar sind; wobei gegebenenfalls die Steuerungseinheit mittels Datenkabeln mit den I/O-Karten verbunden ist (zum Datenaustausch). Die Steuerung bzw. das Bewegen der Ventile/Klappen, die im Verteilermodul beinhaltet sind, kann pneumatisch mittels sogenannter Instrumentenluft erfolgen. Die Instrumentenluft wird über Instrumentenluftleitungen zu Steueranschlüssen der Ventile/Klappen geführt. Die Instrumentenluftverteilungs-Anordnung umfasst insbesondere Schaltelemente (die mit den Instrumentenluftleitungen verbunden sind), mittels derer die Druckbeaufschlagung einzelner Instrumentenluftleitungen gesteuert werden kann. Die Schaltelemente (z.B. Ventile) können mittels elektrischer Schaltsignale gesteuert werden, die über Datenkabel von der Steuerungseinheit übermittelt werden. Hierzu kann insbesondere ein Bus bzw. Feldbus verwendet werden. Ein typischer Aufbau einer Steuerungseinheit oder eines Steuerungssystems, das auf dem Verteilermodul angeordnete Teile umfassen kann, kann wie folgt aussehen: Ein Prozessleitsystem (d.h. insbesondere eine Steuerungssoftware, die auf einem Rechner läuft) ist über Buskabel o.ä. mit I/O-Karten (Input/Output-Karten) verbunden, die z.B.: mittels eines 4-20 mA Signals, die Schaltelemente ansteuern, die dann die Steuerluft/Instrumentenluft für die Ventile öffnen oder schließen. In umgekehrter Richtung werden Signale der Schaltelemente (Instrumente) und Messwerte über die I/O-Karten und das Buskabel an das Prozessleitsystem übermittelt. Die I/O-Karten sind bevorzugt auf dem Verteilermodul angeordnet. Eine Vorrichtung zur Instrumentierungsluftaufbereitung kann vorzugsweise ebenso im Verteilermodul angeordnet bzw. montiert sein.

Bevorzugt umfasst das Verteilermodul eine oder mehrere Messeinrichtungen, insbesondere Temperaturmessgeräte und/oder Druckmessgeräte und/oder Mengenmessgeräte; wobei gegebenenfalls die eine oder die mehreren Messeinrichtungen (insbesondere über I/O-Karten) mit der Steuerungseinheit mittels Datenkabeln verbunden sind, um Messwerte an die Steuerungseinheit zu übermitteln. Alle zur Steuerung nötigen Daten können so erfasst und von der Steuerungseinheit zur Steuerung verwendet werden. Der Vorfertigungsgrad kann so weiter erhöht werden.

Bevorzugt umfasst das Verteilermodul einen am Restgasanschluss oder Restgasauslass angeordneten Abblaseschalldämpfer. Der Begriff "Restgasauslass" soll ein Bauelement bezeichnen, über das ein Restgas an die Umgebung bzw. Atmosphäre abgegeben wird. Wenn vorhanden kann überschüssiges Restgas, das nicht zur Adsorber-Regenerierung benötigt wird, auch in einen Verdunstungskühler geleitet werden, der Wasser durch die Verdunstungskälte abkühlt. Dieses kalte Wasser kann zur Kühlung der Prozessluft vor Eintritt in den Adsorber, der sich in der Adsorptionsphase befindet, eingesetzt werden.

Bevorzugt umfasst das Verteilermodul einen Trägerrahmen, insbesondere einen Stahl-Trägerrahmen, an dem die Ventil- und Klappenbaugruppe, gegebenenfalls der Regenerationsgas-Erhitzer, gegebenenfalls die Steuerungseinheit oder Teile davon, gegebenenfalls der Nachverdichter, und gegebenenfalls der Abblaseschalldämpfer montiert sind; wobei Fluidleitungen zur Verbindung dieser Elemente und zur Verbindung mit dem Verdichteranschluss, dem ersten und dem zweiten Wärmetauscheranschluss und dem ersten und dem zweiten Adsorberanschluss ebenfalls am Trägerrahmen montiert sind. Ein Trägerahmen führt zu einer hohen Stabilität des Verteilermoduls. An dem Trägerrahmen können vorteilhafterweise Zugänge, z.B. Treppen, Bühnen und Türen, zu den Bauelementen des Verteilermoduls angebracht sein oder anbringbar (an dafür vorgesehenen Befestigungselementen) sein.

Weiter bevorzugt ist der Trägerrahmen im Wesentlichen quaderförmig (d.h. weist eine quaderförmige Außenkontur bzw. einen quaderförmigen Umriss auf) und weist eine Länge, eine Breite und eine Tiefe auf; wobei die Höhe gleich der Länge und die Querabmessung gleich der Breite, der Tiefe oder einem Durchschnitt davon ist; wobei bevorzugt die Breite und die Tiefe unabhängig voneinander im Bereich von 3, 5 m bis 7 m liegen und bevorzugt die Länge bevorzugt im Bereich von 10 m bis 30 m, weiter bevorzugt im Bereich von 15 m bis 25 m, noch weiter bevorzugt im Bereich von 15 m bis 20 m, liegt.

Vorzugsweise ist das Verteilermodul, dazu eingerichtet, wenn das Verteilermodul an die Hauptluftverdichter-Anordnung, die wenigstens zwei Adsorbern und die Hauptwärmetauscher-Anordnung verbunden ist, für jeden der Adsorber in unabhängiger Weise voneinander während der Adsorptionsphase des jeweiligen Adsorbers einen Luftstrom zu dem Adsorber zu leiten und nach Durchströmen des Adsorbers von dem Adsorber zu der Hauptwärmetauscher-Anordnung zu leiten; und während der Regenerationsphase des jeweiligen Adsorbers einen Regenerationsgasstrom von der Hauptwärmetauscher-Anordnung zu dem Adsorber zu leiten und nach Durchströmen des Adsorbers zu einem Restgasauslass zu leiten. Die entsprechende Ansteuerung der Ventil- und Klappenbaugruppe kann über eine Steuerungseinrichtung, die insbesondere im Verteilermodul umfasst sein kann, erfolgen.

Vorzugsweise sind im Verteilermodul bzw. in der Ventil- und Klappenbaugruppe die Regelarmaturen nämlich erste Ventile und/oder Klappen, die die Fluidströme von dem Verdichteranschluss zu den Adsorbern bzw. zu den Anschlusspaaren absperren/freigeben, horizontal oder nahezu horizontal angeordnet. Klappen sind vorzugsweise in einer horizontalen Ebene angeordnet; wobei weiter bevorzugt die Klappen, insbesondere falls diese Dreihebelklappen sind, horizontal oder nahezu horizontal angeordnet sind. Die Klappen, die den Luftweg bzw. das Regeneriergas zu den Adsorber umschalten, sind vorzugsweis als Dreihebelklappen ausgeführt, die horizontal eingebaut sind. Die Klappen können offen angeordnet sein, d.h. die Leitung verzweigt sich vor den Klappen und haben eine zuführende Regeneriergasleitung oder es teilt sich eine Regeneriergasleitung auf und nur eine Luftleitung wird zugeführt, die sich erst in einem T-Stück zwischen den Klappen verteilt.

Vorzugsweise sind im Verteilermodul bzw. in der Ventil- und Klappenbaugruppe zweite Ventile und/oder Klappen, die die Fluidströme zwischen Anschlusspaaren und den Wärmetauscheranschlüssen absperren/freigeben, in einer vertikalen oder nahezu vertikalen Ebene angeordnet; wobei die zweiten Ventile und/oder Klappen bevorzugt räumlich über den ersten Ventilen und/oder Klappen angeordnet sind. D.h. vorzugsweise sind im Verteilermodul bzw. in der Ventil- und Klappenbaugruppe die Regelarmaturen (d.h. Ventile und/oder Klappen), die die Fluidströme zu der Hauptwärmetauscher-Anordnung bzw. zu den Wärmetauscheranschlüssen absperren/freigeben, in einer vertikalen Ebene angeordnet. Auch hier können optional die (zweiten) Klappen, insbesondere falls diese Dreihebelklappen sind, horizontal oder nahezu horizontal angeordnet sein.

Weiter bevorzugt sind im Verteilermodul bzw. in der Ventil- und Klappenbaugruppe die Regelarmaturen (d.h. Ventile und/oder Klappen), die die Fluidströme zu den Adsorbern bzw. zu den Anschlusspaaren absperren/freigeben, räumlich über oder räumlich unter den Regelarmaturen (d.h. Ventile und/oder Klappen), die die Fluidströme zu der Hauptwärmetauscher-Anordnung bzw. zu den Wärmetauscheranschlüssen absperren/freigeben, angeordnet.

Bevorzugt sind im Verteilermodul bzw. in der Ventil- und Klappenbaugruppe die Regelarmaturen (d.h. Ventile und/oder Klappen, sowohl zu den Anschlusspaaren als auch zu den Wärmetauscheranschlüssen) möglichst nahe zu den Anschlusspaaren angeordnet.

Bevorzugt werden alle als Dreihebelklappen ausgeführten Regelarmaturen bzw. Klappen in waagrecht bzw. horizontal verlaufende Leitungen eingebaut.

Bevorzugt ist im Verteilermodul eine Vorrichtung zur Druckreduzierung von gasförmigem Sauerstoff (GOX) umfasst bzw. montiert. Eine zugehörige Brandschutz-Vorrichtung kann ebenso am Verteilermodul vorgesehen sein.

Bevorzugt ist im Verteilermodul eine mit dem zweiten Wärmetauscheranschluss fluidisch verbundene Abzweigung vorgesehen, durch die die Restgasleitung von der Hauptwärmetauscher-Anordnung zur Regenerierung der Adsorber (d.h. zu einem jeweiligen zweiten Adsorberanschluss, und in der Folge zum Schalldämpfer) oder zur Vorkühlung einem Verdunstungskühler aufgeteilt wird.

Eine erfindungsgemäße Luftzerlegungsanlage umfasst ein erfindungsgemäßes Verteilermodul und umfasst weiterhin eine Hauptluftverdichter-Anordnung, wenigstens zwei Adsorber, von denen jeder in einer Adsorptionsphase und einer Regenerationsphase betreibbar ist, und eine Hauptwärmetauscher-Anordnung, die mittels Fluidleitungen an das Verteilermodul angebunden sind. Vorzugsweise umfasst das Verteilermodul auch einige oder mehrere verbindende Prozessleitungen von und zu dem Hauptwärmeaustauscher.

Die Luftzerlegungsanlage umfasst weiterhin bevorzugt eine Trennsäulenanordnung, wobei die Hauptwärmetauscher-Anordnung zwischen dem Verteilermodul und der Trennsäulenanordnung angeordnet ist; wobei bevorzugt die Hauptwärmetauscher-Anordnung in einem Hauptwärmetauschermodul montiert ist und/oder die Trennsäulenanordnung in einem Trennsäulenmodul montiert ist. Durch die Anordnung bzw. Platzierung der Hauptwärmetauscher-Anordnung zwischen Verteilermodul und Trennsäulenanordnung kann ein besonders geringer Platzbedarf erreicht werden.

In der Luftzerlegungsanlage liegt die Höhe des Verteilermoduls bezogen auf eine Wärmetauscherhöhe der Hauptwärmetauscher-Anordnung bzw. des Hauptwärmetauschermoduls zwischen Wärmetauscherhöhe minus 5 m und Wärmetauscherhöhe plus 5 m; wobei die Höhe des Verteilermoduls bevorzugt größer als die Wärmetauscherhöhe ist (d.h. die Höhe der Oberkante des Wärmetauschers im Hauptwärmetauschermodul, wenn dieser aufgestellt ist).

Die Adsorber werden in der Adsorptionsphase bevorzugt von unten nach oben durchströmt und in der Regenerationsphase bevorzugt von oben nach unten durchströmt. D.h. die Anschlüsse der Adsorber sind entsprechend mit dem zugehörigen Anschlusspaar des Verteilermoduls verbunden.

In der Luftzerlegungsanlage ist das Verteilermodul bevorzugt direkt neben der der Hauptwärmetauscher-Anordnung bzw. des Hauptwärmetauschermodul angeordnet, wobei ein Abstand kleiner als 4 m (Meter), weiter bevorzugt kleiner als 2 m, am meisten bevorzugt kleiner als 1 m, ist. Die größeren verbindenden Leitungen (LPGAN, Restgas etc.) können in einer Ebene parallel zum Hauptwärmetauschermodul nahe dem Hauptwärmetauschermodul geführt werden.

In der Luftzerlegungsanlage sind die Adsorber bevorzugt in einem möglichst kleinen Abstand zum Verteilermodul (gemessen als Abstand einer Seitenwand der Adsorber, z.B. Behälterwand, zum Verteilermodul) angeordnet, bevorzugt in einem Abstand von weniger als 2 m, weiter bevorzugt in einem Abstand von weniger als 1 m.

Bevorzugt umfasst die Luftzerlegungsanlage eine Vorrichtung Druckreduzierung von gasförmigem Sauerstoff (GOX) und/oder eine Brandschutz-Vorrichtung. Weiter bevorzugt sind diese gegebenenfalls im Verteilermodul umfasst bzw. montiert.

Die Erfindung wird nachfolgend unter Bezugnahme auf die beigefügten Zeichnungen näher erläutert, in denen bevorzugte Ausgestaltungen der vorliegenden Erfindung veranschaulicht sind.

### Kurze Beschreibung der Zeichnungen

Figur 1 zeigt eine Luftzerlegungsanlage gemäß dem Stand der Technik in stark vereinfachter, schematischer Darstellung.
Figuren 2A und 2B zeigen eine Draufsicht und eine Seitenansicht einer Luftzerlegungsanlage, in der ein Verteilermodul gemäß einer Ausführungsform der Erfindung angeordnet ist.
Figuren 3A und 3B zeigen schematisch in der Ventil- und Klappenanordnung beispielhafte Anordnungen von Ventilen und Klappen.

### Ausführliche Beschreibung der Zeichnungen

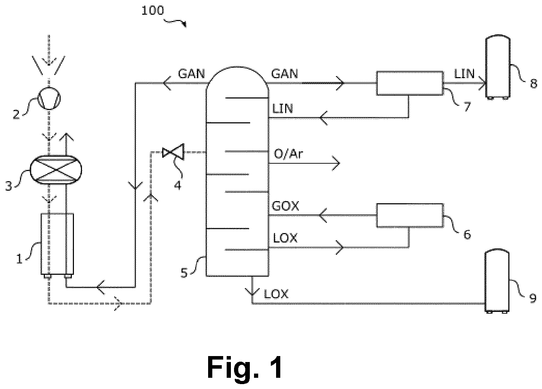

Figur 1 zeigt eine Luftzerlegungsanlage gemäß dem Stand der Technik in stark vereinfachter, schematischer Darstellung. Diese ist insgesamt mit 100 bezeichnet.

Dem Wärmetauscherblock 1, der einen oder mehrere Wärmetauscher in einer entsprechenden Kältebox bzw. Coldbox (d.h. thermisch isolierende Wände, die ein thermisch zu isolierenden Bereich umgeben) umfassen kann, wird ein gestrichelt dargestellter Luftstrom zugeführt, der zuvor in einem Verdichter 2 verdichtet und in einer Adsorbereinrichtung 3 aufgereinigt wurde. Zusätzliche Einrichtungen wie Filter und dergleichen, wie Vorkühlung, sind nicht dargestellt. Im Allgemeinen kann der verdichtete Luftstrom in mehrere Fraktionen geteilt werden, die auf unterschiedliche Druckniveaus nachverdichtet werden und getrennt voneinander durch den Wärmetauscherblock geleitet werden (nicht dargestellt). Die Adsorbereinrichtung 3 umfasst üblicherweise mehrere Adsorber, die im Wechselbetrieb gefahren und entsprechend regeneriert werden können.

In dem Wärmetauscher 1 wird die zugeführte, komprimierte und aufgereinigte Luft im Gegenstrom mit kaltem, gasförmigem angereichertem Stickstoff UN₂ und reinem GAN vom Kopf einer nachfolgend erläuterten Trennsäule 5 (und gegebenenfalls weiteren Prozessströmen, die auf Umgebungstemperatur gebracht werden, also angereicherter UN₂, GAN, GOX IC, GAN IC, etc.) gekühlt. Zumindest ein Teil des gasförmigen angereicherten Stickstoffs UN₂ wird nachdem er durch den Wärmetauscher 1 zur Kühlung der aufgereinigten Luft geleitet wurde zu der Adsorbereinrichtung 3 geleitet und dient als Regenerationsgas, das durch einen Adsorber während dessen Regenerationsphase geleitet wird. Weitere, hier nicht dargestellte Teile kalte, gasförmigen Stickstoffs können nach Durchströmen des Wärmetauschers als Produkt verwendet werden.

Der abgekühlte Luftstrom wird gasförmig bzw. in teilweise flüssiger Form in einen hier beispielhaft mittleren Bereich der Trennsäule 5 eingespeist (z.B. über ein Expansionsventil 4), wobei ebenso eine Einspeisung in andere Bereiche, insbesondere einen unteren Bereich, der Trennsäule denkbar ist. Eine entsprechende Anlage kann zusätzlich eine Nachverdichtung eines (Teil-)Luftstroms und eine Abkühlung in einem Hochdruckwärmetauscher umfassen. Auch dies ist der Übersicht halber nicht dargestellt. Im Falle mehrerer Luftfraktionen können diese (nach einer eventuellen Entspannung mittels einer Turbine) zumindest teilweise in verschiedenen Bereichen der Trennsäule eingespeist werden. Wie bereits erläutert, können anstatt einer einzigen Trennsäule 5, wie in Figur 1 dargestellt, auch mehrere hintereinandergeschaltete Trennsäulen, Doppelsäulen und dergleichen eingesetzt werden.

Für die Zerlegung der verflüssigten Luft werden die unterschiedlichen Siedepunkte ihrer Bestandteile genutzt. In der Trennsäule 5 rieselt die flüssige Luft hierzu über eine Anzahl von stark vereinfacht dargestellten Siebböden im Gegenstrom zu nicht verflüssigter, aufsteigender Luft nach unten. Die Flüssigkeit wird hierbei auf den Böden gestaut und von aufsteigenden Dampfblasen durchströmt. Aus dem Gasstrom verflüssigt sich dabei vor allem der höher siedende Sauerstoff, während aus den Flüssigkeitstropfen bevorzugt der tiefer siedende Stickstoff verdampft. Am kalten Kopf der Trennsäule 5 sammelt sich aus diesem Grund gasförmiger Stickstoff GAN und am wärmeren Boden flüssiger Sauerstoff LOX.

Zur weiteren Aufreinigung der Fraktionen wird der flüssige Sauerstoff LOX vom Boden der Trennsäule 5 in einem Verdampfer 6 verdampft, der gasförmige Stickstoff wird in einem sogenannten Kopfkondensator 7 verflüssigt. Der verdampfte, gasförmige Sauerstoff GOX und der verflüssigte Stickstoff LIN werden wieder der Trennsäule 5 zugeführt, wo die Rektifikation wiederholt wird, bis die gewünschte Reinheit erreicht ist.

Entsprechend reine Fluide können vom Boden bzw. Kopf der Trennsäule 5 entnommen und zur Weiterverwendung in Flüssigtanks 8, 9 gelagert werden.

Der Trennsäule 5 kann ferner beispielsweise eine Sauerstoff-Argon-Mischung O/Ar entnommen werden, aus der in einem separaten Verfahren in einer weiteren Säule hochreines Argon gewonnen werden kann. Auch für die Gewinnung der Edelgase Xenon, Krypton, Helium und/oder Neon werden separate Säulen benötigt.

Zur Kühlung von neu angesaugter Luft (siehe oben) wird ein Teil des gewonnenen Stickstoffs GAN entnommen und wie erläutert zum Wärmetauscher 1 zurückgeführt, wobei zumindest ein Teil nach Durchströmen als Regenerationsgas verwendet werden kann.

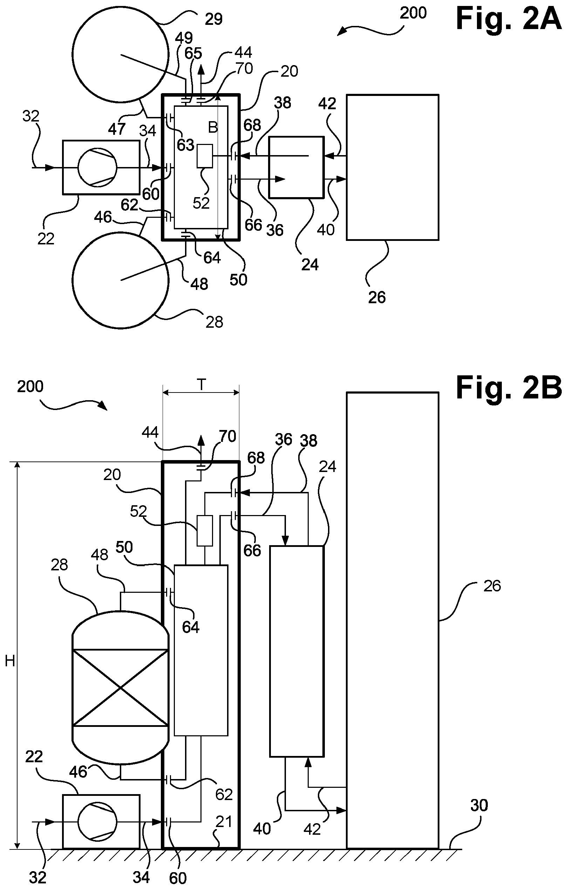

Figuren 2A und 2B zeigen eine Draufsicht (Figur 2A) und eine Seitenansicht (Figur 2B) einer Luftzerlegungsanlage 200, in der ein Verteilermodul 20 gemäß einer Ausführungsform der Erfindung angeordnet ist.

Die dargestellte Luftzerlegungsanlage 200 umfasst mehrere Module, was einen hohen Vorfertigungsgrad ermöglicht. Neben dem Verteilermodul 20 sind ein Hauptverdichtermodul 22, ein Hauptwärmetauschermodul 24 und ein Trennsäulenmodul 26 vorgesehen. Weiterhin umfasst die Luftzerlegungsanlage zwei Adsorber 28, 29. Die Elemente der Luftzerlegungsanlage 200 sind auf einer Bodenfläche 30, etwa einer Betonplatte, angeordnet. Etwaige Tragrahmen oder Ständerkonstruktionen, z.B. in Figur 2B für die Adsorber und das Hauptwärmetauschermodul, sind der Übersichtlichkeit wegen nicht dargestellt, können aber selbstverständlich vorgesehen sein. Abgesehen vom Verteilermodul 20 kann statt des Hauptverdichtermoduls, des Hauptwärmetauschermoduls und des Trennsäulenmoduls unabhängig voneinander jeweils zumindest teilweise auch ein nicht-modular Aufbau aus einzelnen Elementen, die nicht zu einem Modul verbunden sind vorgesehen sein. Entsprechend können unabhängig voneinander statt dem Hauptverdichtermodul, dem Hauptwärmetauschermodul und dem Trennsäulenmodul allgemeiner eine Hauptverdichter-Anordnung, eine Hauptwärmetauscher-Anordnung und eine Trennsäulen-Anordnung, die jeweils die gleichen funktionellen Elemente wie die entsprechenden Module umfassen, wobei die funktionellen Elemente lediglich nicht zu einem Modul verbunden sind. Die nachfolgenden Ausführungen gelten sinngemäß auch für entsprechende Anordnungen statt Modulen.

Ein etwaiger Trägerrahmen, an dem die Bauelemente des Verteilermoduls montiert bzw. befestigt sind, ist in der Figur nicht dargestellt.

Durch das Hauptverdichtermodul 22 wird Luft 32 aus der Umgebung bzw. Atmosphäre angesaugt und verdichtet (z.B. auf einen Druck im Bereich von 4-30 bar). Das Hauptverdichtermodul 22 umfasst neben dem symbolisch dargestellten Hauptverdichter im Allgemeinen einen Filter, mit dem die angesaugte Luft vor dem Verdichten gefiltert wird, und eine Kühleinrichtung, mit der die verdichtete Luft wieder abgekühlt wird (z.B. auf ca. 20 °C, nicht dargestellt). Die Kühleinrichtung kann dazu Wasser verwenden, wobei die Kühlung durch Kontaktkühlung und/oder Verdampfungskühlung erfolgt. Es können ein oder auch mehrere Hauptverdichtermodule bzw. Hauptverdichter-Anordnungen vorgesehen sein. Die Luft wird in der Regel nach der letzten Verdichterstufe vor dem Eintritt in das Verteilermodul gekühlt, etwa in einem Nachkühler, mit einer Kälteanlage oder einem Direktkontaktkühler.

Über eine Fluidleitung, als Verdichterleitung 34 bezeichnet, wird die verdichtete Luft zum Verteilermodul 20 geleitet, durch das die Luft in eine Fluidleitung, als erste Adsorberleitung 46, 47 bezeichnet, zu einem Adsorber, der sich in der Adsorptionsphase befindet, geleitet wird. Nach Durchströmen des Adsorbers wird die gereinigte Luft über eine weitere Fluidleitung, als zweite Adsorberleitung 48, 49 bezeichnet, zum Verteilermodul 20 zurückgeleitet und von diesem in eine Fluidleitung, als erste Wärmetauscherleitung 36 bezeichnet, die mit dem Hauptwärmetauschermodul 24 verbunden ist, geleitet. Im Prinzip können hier auch mehrere erste Wärmetauscherleitungen und entsprechende Anschlüsse im Verteilermodul vorgesehen sein, falls die Luft bereits im Verteilermodul in mehrere Fraktionen aufgeteilt wird.

Das Hauptwärmetauschermodul 24 umfasst einen, z.B. in einer Kältebox bzw. Coldbox angeordneten, Hauptwärmetauscher, in dem die verdichtete, gereinigte Luft im Gegenstrom mit einem oder mehreren kalten von dem Trennsäulenmodul 26 kommenden Fluidströmen abgekühlt wird. Mögliche kalte Fluidströme sind gasförmiger Stickstoff (z.B. UN₂ und/oder GAN) und gasförmiger Sauerstoff (GOX). Einer dieser kalten Fluidströme, bevorzugt gasförmiger angereicherter Stickstoff UN₂, wird als Regenerationsgas durch eine Fluidleitung, als zweite Wärmetauscherleitung 38 bezeichnet, vom Hauptwärmetauschermodul 24 zum Verteilermodul 20 geleitet.

Auch wenn im Einzelnen nicht dargestellt, sind hierfür (d.h. für die verschiedenen kalten Fluidströme) im Allgemeinen mehrere Fluidleitungen vom Hauptwärmetauschermodul zum Verteilermodul vorgesehen, etwa die zweite Wärmetauscherleitung 38 für gasförmigen angereicherten Stickstoff UN₂ und eine weitere, nicht dargestellte Fluidleitung für gasförmigen reinen Stickstoff GAN. Neben dem zweiten Wärmetauscheranschluss 68 (siehe unten) können dann weitere Anschlüsse im Verteilermodul vorhanden sein, die eine fluidische Verbindung mit diesen vom Hauptwärmetauschermodul kommenden Fluidleitungen ermöglichen. Im Verteilermodul können mit diesen Anschlüssen verbundene Fluidleitungen vorgesehen sein, die die Weiterleitung der verschiedenen Fluidströme, die vom Hauptwärmetauschermodul kommen, ermöglichen. Insbesondere können mit den Anschlüssen verbundene Fluidleitungen und Vorrichtungen (Ventile, Anschlüsse) vorgesehen sein, die eine Ausleitung (z.B. als Produktströme) eines oder mehrerer der Fluidströme ermöglichen, z.B. kann vorgesehen sein, dass gasförmiger reiner Stickstoff GAN als Produkt ausgeleitet wird.

Die verdichtete, gereinigte, abgekühlte Luft wird vom Hauptwärmetauschermodul 24 durch wenigstens eine Fluidleitung 40 zum Trennsäulenmodul 26 geleitet, in dem die Luftspaltung, d.h. die Trennung der Luft in ihre Bestandteile, erfolgt (wie bereits im Zusammenhang mit Figur 1 beschrieben). Dazu umfasst das Trennsäulenmodul 26 eine oder mehrere Trennsäulen, die z.B. in einer Kältebox bzw. Coldbox angeordnet sind. Falls mehrere Luftfraktionen durch das Hauptwärmetauschermodul abgekühlt werden, können hier entsprechend mehrere Fluidleitungen zwischen Hauptwärmetauschermodul und Trennsäulenmodul vorgesehen sein.

Vom Trennsäulenmodul 26 werden der eine oder die mehreren kalten Fluidströme durch wenigstens eine Fluidleitung 42 zum Hauptwärmetauschermodul 24 geleitet. Etwaige Fluidleitungen und/oder Behälter, die für flüssige und/oder gasförmige Produkte (d.h. getrennte Bestandteile der Luft) vorgesehen sind, sind in den Figuren 2A, 2B nicht dargestellt.

Das über die Fluidleitung (zweite Wärmetauscherleitung) 38 vom Hauptwärmetauschermodul 24 zugeleitete Regenerationsgas wird vom Verteilermodul in eine Fluidleitung (zweite Adsorberleitung) zu einem Adsorber, der sich in der Regenerationsphase befindet, geleitet. Das über eine weitere Fluidleitung (erste Fluidleitung) vom Adsorber zum Verteilmodul 20 zurückgeleitete Regenerationsgas wird über einen Restgasauslass 44 als Restgas an die Umgebung abgegeben.

Das Verteilermodul 20 weist eine Bodenseite 21 auf, auf der es auf der Bodenfläche 30 stehend angeordnet werden kann. Eine vertikale Abmessung bzw. Höhe H des Verteilermoduls, d.h. eine Abmessung des Verteilermoduls 20 senkrecht zur Bodenseite 21, ist größer als eine Querabmessung des Verteilermoduls, d.h. eine Abmessung des Verteilermoduls 20 parallel zur Bodenseite 21. Als Querabmessung kann etwa eine maximale Abmessung parallel zur Bodenseite verwendet werden. Ebenso kann eine durchschnittliche Abmessung parallel zur Bodenseite verwendet als Querabmessung werden. Auch könnte die Wurzel aus dem Flächeninhalt der Bodenseite als Querabmessung verwendet werden. Im Falle eines im Wesentlichen quaderförmigen Verteilermoduls (wie dargestellt), dass also die Bodenseite ein Rechteck mit einer Tiefe T und einer Breite B bildet, könnte beispielsweise das Größere von Breite B und Tiefe T oder ein Durchschnitt von Breite B und Tiefe T als Querabmessung verwendet werden.

Bevorzugt beträgt die Höhe H des Verteilermoduls mindestens das 1,5-fache, weiter bevorzugt mindestens das 2-fache, noch weiter bevorzugt mindestens das 3-fache, der Querabmessung des Verteilermoduls. Die Vorteile eines so charakterisierten Verteilermoduls liegen einerseits darin, dass die Elemente des Verteilermoduls in diesem vertikal angeordnet werden können, so dass der Flächenverbrauch bei stehend auf der Bodenseite aufgestelltem Verteilermodul verglichen mit einer horizontalen Anordnung klein ist und somit eine Gesamtfläche der Luftzerlegungsanlage relativ klein gehalten werden kann. Andererseits ist ein liegender Transport des Verteilermoduls über Straßen von einer Herstellungsanlage zur Luftzerlegungsanlage, genauer deren Baustelle, möglich. Weiterhin sind Leitungen und Anschlüsse zur Anbindung des Wärmetauschermoduls und des vertikalen Verteilermoduls wesentlich kürzer und in dem Verteilermodul integriert und müssen nicht auf er Baustelle montiert werden.

Beispielsweise kann die Querabmessung im Bereich von 3 m bis 7 m, vorzugsweise im Bereich von 3,5 m bis 6 m, liegen und die Höhe H größer als 10 m sein, vorzugsweise im Bereich von 10 m bis 30 m, weiter vorzugsweise im Bereich von 15 m bis 25 m, noch weiter vorzugsweise im Bereich von 15 m bis 20 m, liegen. Im Falle eines quaderförmigen Verteilermoduls können hierbei die Tiefe T und die Breite B jeweils unabhängig voneinander in den für die Querabmessung genannten Bereichen liegen (d.h. im Bereich von 3 m bis 7 m, vorzugsweise im Bereich von 3,5 m bis 6 m). Beispielsweise könnte ein Verteilermodul eine Höhe H (entsprechend einer Transportlänge bei liegendem Transport) von etwa 23 m, eine Tiefe T (entsprechend einer Transportbreite) von etwa 5,2 m und eine Breite B (entsprechend einer Transporthöhe) von etwa 4,8 m aufweisen.

Im Verteilermodul 20 sind Fluidanschlüsse zur Verbindung mit den vorstehend bereits erwähnten Fluidleitungen vorgesehen. Im Einzelnen sind folgende Fluidanschlüsse vorgesehen: ein Verdichteranschluss 60 zur Verbindung mit der Verdichterleitung 34, für jeden Adsorber ein erster Adsorberanschluss 62, 63 zur Verbindung mit der ersten Adsorberleitung 46, 47, für jeden Adsorber ein zweiter Adsorberanschluss 64, 65 zur Verbindung mit der zweiten Adsorberleitung 48, 49, ein erster Wärmetauscheranschluss 66 zur Verbindung mit der ersten Wärmetauscherleitung 36, ein zweiter Wärmetauscheranschluss 68 zur Verbindung mit der zweiten Wärmetauscherleitung 38, und ein Restgasanschluss 70 zur Verbindung mit dem Restgasauslass 44; und eventuell weiterer zur Anbindung eines Verdunstungskühlers und/oder zur Anbindung bzw. Ausleitung von Produkten wie z.B. GAN, PGAN, GAN IC, GOXIC , GOX. Der erste Adsorberanschluss und der zweite Adsorberanschluss, die dem gleichen Adsorber zugeordnet sind, bilden jeweils ein Anschlusspaar (46, 48 und 47, 49). Falls, wie bevorzugt, der Restgasauslass im Verteilermodul integriert ist, kann auf einen Restgasanschluss verzichtet werden. Sind zwei oder mehr (Haupt-)Wärmetauscher im Hauptwärmetauschermodul (Kältebox bzw. Coldbox) umfasst, können die Prozessleitungen getrennt zum Verteilermodul geführt und dort zusammengefasst bzw. zusammengeleitet werden, oder bereits in einem eigenen Modul, das am Hauptwärmetauschermodul angeordnet ist oder darin integriert ist, zusammengeleitet werden.

Im Verteilermodul 20 ist eine Ventil- und Klappenbaugruppe 50 eingeschlossen, wobei die vorstehend genannten Anschlüsse jeweils unabhängig voneinander in der Ventil- und Klappenbaugruppe 50 umfasst sind oder mit dieser mittels Fluidleitungen verbunden sind. Die Ventil- und Klappenbaugruppe 50 umfasst Ventile und/oder Klappen, die so gesteuert werden können, dass jeder angebundene Adsorber bzw. das mit diesem verbundene Anschlusspaar (diesem zugeordnete Anschlusspaar) wahlweise in einem ersten und einem zweiten Zustand betrieben werden kann. Im ersten Zustand ist der Verdichteranschluss mit dem ersten Adsorberanschluss fluidisch verbunden und der zweite Adsorberanschluss mit dem ersten Wärmetauscheranschluss fluidisch verbunden, der vom Hauptverdichtermodul kommende Luftstrom wird also zunächst in den Adsorber (der sich in der Adsorptionsphase befindet) geleitet und anschließend zum Hauptwärmetauschermodul geleitet. Im zweiten Zustand ist der zweite Wärmetauscheranschluss mit dem zweiten Adsorberanschluss fluidisch verbunden und der erste Adsorberanschluss mit dem Restgasanschluss bzw. Restgasauslass verbunden, der vom Hauptwärmetauschermodul kommende Regenerationsgasstrom wird also zunächst in den Adsorber (der sich in der Regenerationsphase befindet) geleitet und anschließend an die Umgebung abgegeben. Die Adsorber können so, ohne Unterbrechung des Betriebs der Luftzerlegungsanlage, wechselweise in der Adsorptionsphase und der Regenerationsphase betrieben werden.

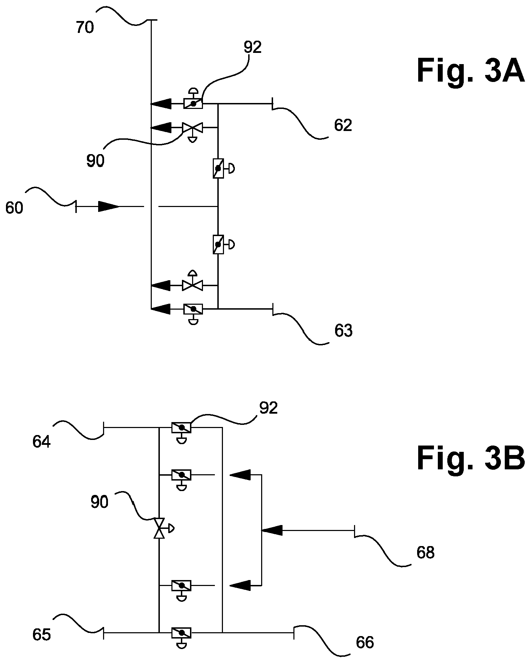

Solche Anordnungen von Ventilen bzw. Klappen sind dem Fachmann an sich bekannt (siehe etwa H.-W. Häring (Hrsg.), Industrial Gases Processing, Wiley-VCH, 2006, insbesondere Fig. 2.3A darin). Gemäß der vorliegenden Erfindung sind diese allerdings in dem Verteilermodul angeordnet. Der Vollständigkeit halber ist in den Figuren 3A und 3B eine entsprechende Ventil- und Klappenbaugruppe dargestellt, wobei jeweils die Anschlüsse mit Bezugszeichen versehen sind. Dabei ist in Figur 3A die Anordnung von Ventilen 90 und Klappen 92 (die als erste Ventile und/oder Klappen bezeichnet werden können) gezeigt (nur einige stellvertretend mit Bezugszeichen versehen), die die ersten Adsorberanschlüsse 62, 63 mit dem Verdichteranschluss 60 und dem Restgasanschluss 70 verbindet, und in Figur 3B die Anordnung von Ventilen/Klappen (die als zweite Ventile und/oder Klappen bezeichnet werden können) gezeigt, die die zweiten Adsorberanschlüsse 64, 65 mit dem ersten Wärmetauscheranschluss 66 und dem zweiten Wärmetauscheranschluss 68 verbindet. Hierbei ist anzumerken, dass die Positionierung der Anschlüsse in den Figuren lediglich schematisch ist und nicht unbedingt mit einer tatsächlichen Lage übereinstimmt, daher sind ist die unterschiedliche Positionierung in den Figuren 3A, 3B verglichen mit den Figuren 2A, 2B lediglich der Einfachheit der Darstellung geschuldet. Die Anordnung der Ventile/Klappen der Figur 3A erfolgt vorzugsweise in einer horizontalen Ebene; die Anordnung der Ventile/Klappen der Figur 3B erfolgt vorzugsweise in einer vertikalen Ebene. Die Ventile/Klappen der Figur 3B sind vorzugsweise über den Ventilen/Klappen der Figur 3B angeordnet.

Bevorzugt ist im Verteilermodul 20 ein Regenerationsgaserhitzer 52 montiert, um das Regenerationsgas während der Aufwärmphase der Regenerationsphase eines Adsorbers zu erhitzen. Der Regenerationsgaserhitzer ist mit dem zweiten Wärmetauscheranschluss 68 verbunden und zwischen diesem und der Ventil- und Klappenbaugruppe 50, mit der er mittels einer Fluidleitung verbunden ist, angeordnet. Alternativ könnte ein Regenerationsgaserhitzer auch neben dem Verteilermodul aufgestellt werden. Die Integration in das Verteilmodul 20 ist jedoch vorteilhaft, da so der Vorfertigungsgrad weiter erhöht werden kann.

Der Restgasauslass 44 vorzugsweise ebenfalls in das Verteilermodul integriert sein. Insbesondere kann ein (nicht dargestellter) Abblaseschalldämpfer am Restgasauslass und am Verteilermodul montiert sein.

Falls eine Aufteilung in mehrere Luft-Fraktionen des von einem der Adsorber kommenden verdichteten, gereinigten Luftstroms und/oder eine Nachverdichtung des Luftstroms bzw. einer Luft-Fraktion vorgesehen ist, können entsprechende Fluidleitungen und Ventile und/oder eventuell vorgesehene Verdichter ebenfalls im Verteilermodul montiert sein. Das gleiche gilt für alle Fluidleitungen der Produkte (N2, Argon, O2), die vom Wärmetauscher kommend über im Verteilermodul integrierte Fluidleitungen und Vorrichtungen (Ventile, Anschlüsse) geleitet werden. Vorzugsweise sind Absperrklappen, Mengen- und Temperaturmesseinrichtungen und die Anschlüsse zu weiterführenden Verbindung mit dem Endverbraucher (über eine anschließende Rohrbrücke etc.) auch auf dem Verteilermodul angeordnet.

## Patentansprüche

1. Verteilermodul (20) für eine verfahrenstechnische Anlage (200), das an eine Hauptluftverdichter-Anordnung (22), wenigstens zwei Adsorber (28, 29), von denen jeder in einer Adsorptionsphase und einer Regenerationsphase betreibbar ist, und eine Hauptwärmetauscher-Anordnung (24) mittels Fluidleitungen anbindbar ist, umfassend
einen Verdichteranschluss (60), für jeden anzubindenden Adsorber jeweils ein Anschlusspaar mit einem ersten Adsorberanschluss (46, 47) und einem zweiten Adsorberanschluss (48, 49), einen ersten Wärmetauscheranschluss (66) und einen zweiten Wärmetauscheranschluss (68), und einen Restgasanschluss (70) oder einen Restgasauslass (44); und
eine Ventil- und Klappenbaugruppe (50), die dazu eingerichtet ist, für jedes Anschlusspaar wahlweise:
in einem ersten Zustand des Anschlusspaars den Verdichteranschluss (60) mit dem ersten Adsorberanschluss (46, 47) des Anschlusspaars fluidisch zu verbinden und den zweiten Adsorberanschluss (48, 49) des Anschlusspaars mit dem ersten Wärmetauscheranschluss (66) fluidisch zu verbinden, und
in einem zweiten Zustand des Anschlusspaars den zweiten Wärmetauscheranschluss (68) mit dem zweiten Adsorberanschluss (48, 49) des Anschlusspaars fluidisch zu verbinden und den ersten Adsorberanschluss (46, 47) des Anschlusspaars mit dem Restgasanschluss (70) oder einen Restgasauslass (44) fluidisch zu verbinden;
wobei das Verteilermodul eine Bodenseite (21) aufweist und eine senkrecht zur Bodenseite gemessene Höhe (H) des Verteilermoduls größer ist als eine parallel zur Bodenseite gemessene Querabmessung (T, B) des Verteilermoduls.

2. Verteilermodul nach Anspruch 1, wobei die Höhe (H) wenigstens um das 1,5-fache, bevorzugt wenigstens um das 2-fache, größer ist als die Querabmessung (T, B).

3. Verteilermodul nach einem der vorstehenden Ansprüche, wobei die Querabmessung (T, B) eines ist von einer maximalen Abmessung des Verteilermoduls parallel zur Bodenseite (21), einer durchschnittlichen Abmessung des Verteilermoduls parallel zur Bodenseite, die Wurzel aus einen Flächeninhalt der Bodenseite.

4. Verteilermodul nach einem der vorstehenden Ansprüche,
wobei im Verteilermodul bzw. in der Ventil- und Klappenbaugruppe erste Ventile und/oder Klappen, die die Fluidströme zu den Adsorbern bzw. zu den Anschlusspaaren absperren/freigeben, horizontal oder nahezu horizontal angeordnet sind; und/oder
wobei im Verteilermodul bzw. in der Ventil- und Klappenbaugruppe zweite Ventile und/oder Klappen, die die Fluidströme zwischen Anschlusspaaren und den Wärmetauscheranschlüssen absperren/freigeben, in einer vertikalen oder nahezu vertikalen Ebene angeordnet sind;
wobei die zweiten Ventile und/oder Klappen bevorzugt räumlich über den ersten Ventilen und/oder Klappen angeordnet sind; und
wobei bevorzugt die ersten und/oder zweiten Klappen, insbesondere falls diese als Dreihebelklappen ausgeführt sind, horizontal oder nahezu horizontal angeordnet sind.

5. Verteilermodul nach einem der vorstehenden Ansprüche, umfassend einen Regenerationsgas-Erhitzer (52), der fluidisch mit dem zweiten Wärmetauscheranschluss (68) verbunden.

6. Verteilermodul nach einem der vorstehenden Ansprüche, umfassend einen am Restgasanschluss (70) oder Restgasauslass (44) angeordneten Abblaseschalldämpfer.

7. Verteilermodul nach einem der vorstehenden Ansprüche, umfassend einen Trägerrahmen, insbesondere einen Stahl-Trägerrahmen, an dem die Ventil- und Klappenbaugruppe und/oder soweit abhängig von Anspruch 5 der Regenerationsgas-Erhitzer und/oder gegebenenfalls eine Steuerungseinheit, und/oder soweit abhängig von Anspruch 6 der Abblaseschalldämpfer montiert sind; wobei Fluidleitungen zur Verbindung dieser Elemente und zur Verbindung mit dem Verdichteranschluss, dem ersten und dem zweiten Wärmetauscheranschluss und dem ersten und dem zweiten Adsorberanschluss ebenfalls am Trägerrahmen montiert sind.

8. Verteilermodul nach Anspruch 7, wobei der Trägerrahmen im Wesentlichen quaderförmig ist und eine Länge, eine Breite und eine Tiefe aufweist; wobei die Höhe gleich der Länge und die Querabmessung gleich der Breite, der Tiefe oder einem Durchschnitt davon ist; wobei bevorzugt die Breite und die Tiefe unabhängig voneinander im Bereich von 3, 5 m bis 7 m liegen und bevorzugt die Länge bevorzugt im Bereich von 10 m bis 30 m liegt.

9. Verteilermodul nach einem der vorstehenden Ansprüche, dazu eingerichtet, wenn das Verteilermodul an die Hauptluftverdichter-Anordnung, die wenigstens zwei Adsorbern und die Hauptwärmetauscher-Anordnung verbunden ist, für jeden der Adsorber in unabhängiger Weise voneinander
während der Adsorptionsphase des jeweiligen Adsorbers einen Luftstrom zu dem Adsorber zu leiten und nach Durchströmen des Adsorbers von dem Adsorber zu der Hauptwärmetauscher-Anordnung zu leiten; und
während der Regenerationsphase des jeweiligen Adsorbers einen Regenerationsgasstrom von der Hauptwärmetauscher-Anordnung zu dem Adsorber zu leiten und nach Durchströmen des Adsorbers zu einem Restgasauslass zu leiten.

10. Verteilermodul nach einem der vorstehenden Ansprüche, umfassend eine Steuerungseinheit, die dazu eingerichtet ist, die Ventil- und Klappenbaugruppe zu steuern, wobei ein Anschlusspaar entsprechend dem ersten Zustand betrieben wird, um den daran angebundenen Adsorber in der Adsorptionsphase zu betreiben, und entsprechend dem zweiten Zustand betrieben wird, um den daran angebundenen Adsorber in der Regenerationsphase zu betreiben; wobei vorzugsweise die Steuerungseinheit dazu eingerichtet ist, die Ventil- und Klappenbaugruppe zu steuern, so dass abwechselnd wenigstens ein Anschlusspaar entsprechend dem ersten Zustand betrieben wird.

11. Verteilermodul nach einem der vorstehenden Ansprüche, umfassend eine Instrumentenluftverteilungs-Anordnung mit Instrumentenluftleitungen, die mit Steueranschlüssen von in der Ventil- und Klappenbaugruppe umfassten Ventilen und/oder Klappen fluidisch verbunden sind; wobei bevorzugt I/O-Karten auf dem Verteilermodul angeordnet sind, die zum Datenaustausch mit Steuerelementen der Instrumentenluftverteilungs-Anordnung, die zum Schalten von Instrumentenluft dienen, verbunden sind, wobei die I/O-Karten mit Datenkabeln, insbesondere Buskabeln, verbindbar sind; wobei, soweit abhängig von Anspruch 10, die Steuerungseinheit mittels Datenkabeln mit den I/O-Karten verbunden ist.

12. Verteilermodul nach einem der vorstehenden Ansprüche, umfassend eine oder mehrere Messeinrichtungen, insbesondere Temperaturmessgeräte und/oder Druckmessgeräte und/oder Mengenmessgeräte; wobei, soweit abhängig von Anspruch 10, die eine oder die mehreren Messeinrichtungen, insbesondere über I/O-Karten, mit der Steuerungseinheit mittels Datenkabeln verbunden sind, um Messwerte an die Steuerungseinheit zu übermitteln.

13. Luftzerlegungsanlage (200) umfassend ein Verteilermodul (20) nach einem der vorstehenden Ansprüche und weiter umfassend eine Hauptluftverdichter-Anordnung (22), wenigstens zwei Adsorber (28, 29), von denen jeder in einer Adsorptionsphase und einer Regenerationsphase betreibbar ist, und eine Hauptwärmetauscher-Anordnung (24), die mittels Fluidleitungen an das Verteilermodul angebunden sind.

14. Luftzerlegungsanlage nach Anspruch 13, umfassend eine Trennsäulenanordnung (26), wobei die Hauptwärmetauscher-Anordnung (24) zwischen dem Verteilermodul (20) und der Trennsäulenanordnung (26) angeordnet ist; wobei bevorzugt die Hauptwärmetauscher-Anordnung in einem Hauptwärmetauschermodul montiert ist und/oder die Trennsäulenanordnung in einem Trennsäulenmodul montiert ist.

15. Luftzerlegungsanlage nach Anspruch 13 oder 14, wobei die Höhe (H) des Verteilermoduls (20) bezogen auf eine Wärmetauscherhöhe der Hauptwärmetauscher-Anordnung (24) bzw. des Hauptwärmetauschermoduls zwischen Wärmetauscherhöhe minus 5 m und Wärmetauscherhöhe plus 5 m liegt; wobei die Höhe (H) des Verteilermoduls bevorzugt größer als die Wärmetauscherhöhe ist.
